(19) Europäisches Patentamt
European Patent Office
Office européen des brevets

(11) EP 2 680 522 A1

(12) **EUROPEAN PATENT APPLICATION**

(43) Date of publication:
**01.01.2014 Bulletin 2014/01**

(21) Application number: **12173366.1**

(22) Date of filing: **25.06.2012**

(51) Int Cl.:
***H04L 27/02*** *(2006.01)* ***H04L 27/08*** *(2006.01)*
***H04L 5/00*** *(2006.01)* ***H04L 27/26*** *(2006.01)*
***H04W 52/02*** *(2009.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fraunhofer-Gesellschaft zur Förderung der angewandten Forschung e.V.**
**80686 München (DE)**

(72) Inventors:
- **Forster, Christian**
  **90403 Nürnberg (DE)**
- **Breiling, Marco**
  **91052 Erlangen (DE)**
- **Mull, Andreas**
  **90482 Nürnberg (DE)**
- **Milosiu, Heinrich**
  **91056 Erlangen (DE)**
- **Oehler, Frank**
  **91325 Adelsdorf (DE)**

(74) Representative: **Schenk, Markus et al**
**Patentanwälte Schoppe, Zimmermann, Stöckeler, Zinkler & Partner**
**Postfach 246**
**82043 Pullach bei München (DE)**

# (54) Concept for energy efficient reception of payload information in a communication system

(57) Embodiments of the present invention provide a transmitter configured to transmit payload information via an OFDM signal so that predefined sub-carriers of the OFDM signal are modulated according to the payload information and at least a proper subset of the predefined sub-carriers is also modulated according to a content information related to a content of the payload information and dedicated for wake-up receivers of the payload information.

Further embodiments, provide a mobile communication device configured to receive the OFDM signal. The mobile communication device comprises an OFDM receiver configured to receive the payload information via the OFDM signal in response to a wake-up signal, and a wake-up receiver is configured to receive the content information of the OFDM signal and to provide the wake-up signal for the OFDM receiver if the content information fulfills a predefined criteria.

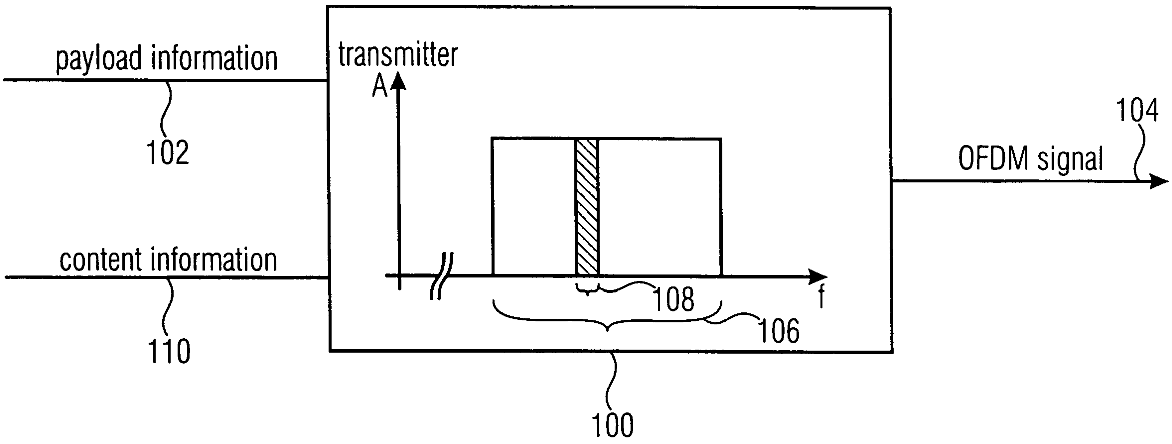


FIGURE 1

EP 2 680 522 A1

## Description

Embodiments relate to a concept for energy efficient reception of payload information in a communication system. Further embodiments relate to a transmitter. Further embodiments relate to a mobile communication device comprising an OFDM receiver and a wake-up receiver (OFDM = orthogonal frequency-division multiplexing). Some embodiments relate to a low power object based data reception for broadcasting systems.

Mobile devices - like smartphones - usually demand for ultra low power solutions to save battery life. In addition, recent examples demonstrate that the growing popularity of smartphones is stretching mobile phone networks to their limits [J. Wortham, "Customers Angered as iPhones Overload AT&T," The New York Times, no. New York Edition, p. B1, 03.09.2009]. Next generation networks like LTE Advanced (LTE = Long Term Evolution) may provide a temporary solution to handle the immense data volume generated by mobile devices. However on the long term, it is most likely that mobile phone networks must also be alleviated by off-loading the distribution of mass data to dedicated broadcast systems.

Therefore, it is the object of the present invention to provide a concept for reception of payload information in a communication system that provides an improved trade-off between energy efficiency and reliability.

This object is solved by a transmitter according to claim 1, a mobile communication device according to claim 7, a method for transmitting according to claim 13, a method for receiving according to claim 14 and a computer program according to claim 15.

Embodiments provide a transmitter configured to transmit payload information via an OFDM signal (OFDM = orthogonal frequency-division multiplexing) so that predefined sub-carriers of the OFDM signal are modulated according to the payload information and at least a proper subset of the predefined sub-carriers is also modulated according to a content information related to a content of the payload information and dedicated for wake-up receivers of the payload information.

Embodiments provide a mobile communication device comprising a wake-up receiver and an OFDM receiver. The wake-up receiver is configured to provide a wake-up signal. The OFDM receiver is configured to receive payload information via an OFDM signal in response to the wake-up signal, wherein predefined sub-carriers of the OFDM signal are modulated according to the payload information and at least a proper subset of the predefined sub-carriers is also modulated according to a content information related to a content of the payload information dedicated for wake-up receivers of the payload information. Thereby, the wake-up receiver is configured to receive the content information of the OFDM signal and to provide the wake-up signal for the OFDM receiver if the content information fulfills a predefined criteria.

In embodiments, payload information is transmitted via an OFDM signal by modulating predefined sub-carriers of the OFDM signal according to the payload information. In addition, content information related to a content of the payload information is transmitted via the OFDM signal by modulating a proper subset of the predefined sub-carriers of the OFDM signal additionally according to the content information. Hence, besides being modulated according to the payload information, the proper subset of the predefined sub-carriers is also modulated according to the content information, for example, such that the modulation according to the content information superimposes the modulation according to the payload information. This enables the wake-up receiver, e.g. a low power wake-up receiver, of the mobile communication device to receive the content information of the OFDM signal and to provide a wake-up signal for the OFDM receiver if the content information fulfills a predefined criteria.

According to some embodiments, the proper subset of the predefined sub-carriers can be modulated according to the content information using OOK (OOK = on-off keying). The wake-up receiver can be configured to detect an energy level of the proper subset of the predefined sub-carriers of the OFDM signal in order to receive the content information.

According to some embodiments, the OFDM signal can comprise a sequence of OFDM symbols, wherein the content information can comprise a sequence of content symbols, and wherein the proper subset of the predefined sub-carriers in each OFDM symbol can be sequentially modulated in accordance with the corresponding content symbol. The wake-up receiver can be configured to detect an energy level of the proper subset of the predefined sub-carriers in each OFDM symbol in order to receive the sequence of content symbols.

In such embodiments, the wake-up receiver can comprise a correlator configured to correlate the sequence of content symbols with a reference sequence of content symbols, wherein the content information fulfills the predefined criteria if the sequence of content symbols matches the reference sequence of content symbols.

In such embodiments, the content information can be gold coded so that the sequence of content symbols is a sequence of gold coded chips. Thereby, the wake-up receiver can comprise a gold code decoder configured to decode the sequence of gold coded chips in order to obtain the content information.

According to some embodiments, the payload information can comprise blocks each of which is individually forward error corrected, wherein the blocks extend over a number of OFDM symbols, wherein a ratio between a number of predefined sub-carriers and a number of sub-carriers of the subset of predefined sub-carriers is so that an error introduced by the OOK is correctable. Thereby, the OFDM receiver can be configured to demodulate the sequence of OFDM symbols in order to obtain the blocks of the payload information, and to correct the error introduced by the OOK using the individual forward error correction of each block.

Further embodiments provide a method comprising the step of transmitting payload information via an OFDM signal so that predefined sub-carriers of the OFDM signal are modulated according to the payload information and at least a proper subset of the predefined sub-carriers is also modulated according to an content information related to a content of the payload information and dedicated for wake-up receivers of the payload information.

Further embodiments provide a method for receiving payload information via an OFDM signal with an OFDM receiver in response to a wake-up signal provided by a wake-up receiver. Thereby, predefined sub-carriers of the OFDM signal are modulated according to the payload information and at least a proper subset of the predefined sub-carriers is also modulated according to a content information related to a content of the payload information dedicated for wake-up receivers of the payload information. The method comprises the step of receiving content information of the OFDM signal with the wake-up receiver and the step of providing the wake-up signal with the wake-up receiver if the content information fulfills a predefined criteria.

Embodiments of the present invention are described herein making reference to the appended drawings.

Fig. 1 shows a block diagram of a transmitter according to an embodiment of the present invention.

Fig. 2 shows a block diagram of a mobile communication device according to an embodiment of the present invention.

Fig. 3 shows a block diagram of a wake-up receiver according to an embodiment of the present invention.

Fig. 4 shows in a diagram a spectrum of three communication channels of a communication system and a down mixed version of one of the three communication channels.

Fig. 5 shows a flow chart of a method for transmitting according to an embodiment of the present invention.

Fig. 6 shows a flow chart of a method for receiving according to an embodiment of the present invention.

Fig. 7 shows a block diagram of a exemplary communication system comprising a transmitter and a mobile communication device according to an embodiment.

Fig. 8 shows in a diagram a spectrum of an OFDM signal according to an embodiment.

Fig. 9 shows a block diagram of a wake-up receiver according to an embodiment.

Fig. 10 shows in a table a transmit bit length, a wake-up current, a data rate and a packet length for three different FFT modes in the embodiment's adaption for DVB-T2.

Fig. 11 shows in a table a packet format of a logical packet layer, wherein the packet format includes name, content and length.

Fig. 12 shows in a diagram packet rates of selected DVB-T2 modes in dependence on selected FFT modes.

Fig. 13 shows in a diagram simulation results of DVB-T2 bit error rates in dependence on signal-tonoise ratios and communication channels.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

Fig. 1 shows a block diagram of a transmitter 100 according to an embodiment of the present invention. The transmitter 100 is configured to transmit payload information 102 via an OFDM signal 104 (OFDM = orthogonal frequency-division multiplexing) so that predefined sub-carriers 106 of the OFDM signal 104 are modulated according to the payload information 102 and at least a proper subset 108 of the predefined sub-carriers 106 is also modulated according to a content information 110 of the payload information 102 and dedicated for wake-up receivers of the payload information 102.

In embodiments, payload information 102 is transmitted via an OFDM signal 104 by modulating predefined sub-carriers 106 of the OFDM signal 104 according to the payload information 102. In addition, content information 110 related to a content of the payload information 102 is transmitted via the OFDM signal 104 by modulating a proper subset 108 of the predefined sub-carriers 106 of the OFDM signal 104 additionally according to the content information 110. Hence, besides being modulated according to the payload information 102, the proper subset 108 of the predefined sub-carriers 106 is also modulated according to the content information 110, for example, such that the modulation according to the content information 110 superimposes the modulation according to the payload information 102.

According to some embodiments, a wake-up receiver, e.g. a low power wake-up receiver, of a mobile communication device can receive the content information of the OFDM signal and provide a wake-up signal for an OFDM receiver of the mobile communication device if the content information fulfills a predefined criteria.

As already mentioned, the OFDM signal 104 comprises predefined sub-carriers 106. Besides, the OFDM signal 104 can comprise other sub-carriers, e.g., pilot sub-carriers, not corresponding to the predefined sub-carriers 106. The proper subset 108 of the predefined sub-carriers 106 can be at least one contiguous group of predefined sub-carriers such that the proper subset 108 of the predefined sub-carriers 106 is located in at least one frequency range. According to some embodiments, a subset of the other sub-carriers, e.g., a subset of the pilot sub-carriers, that are located in the at least one frequency range can also be modulated according to the content information 110. In other embodiments, the subset of other sub-carriers, e.g., the subset of the pilot sub-carriers, that are located in the at least one frequency range are not modulated according to the content information 110, for example, in order to improve channel estimation on the receiver side.

In some embodiments, the payload information 104 can comprise a plurality of different messages or data, wherein the content information may indicate the massage or data of the plurality of different messages or data currently transmitted or scheduled for transmission via the OFDM signal 104.

In some embodiments, the transmitter 100 can be configured to modulate the proper subset 108 of the predefined sub-carriers 106 according to the content information 110 using OOK (OOK = on-off keying).

Furthermore, the transmitter 100 can be configured to modulate the proper subset 108 of the predefined sub-carriers 106 according to the content information 110 using OOK such that an energy level of the proper subset 108 of the predefined sub-carriers 106 may remain unaltered, and such that in an off-state of the OOK the energy level of the proper subset 108 of the predefined sub-carriers 106 is set to zero.

Hence, in some embodiments, only in the off-state of the OOK the energy level of the proper subset 108 of the predefined sub-carriers 106 is affected by the OOK. Note that the total energy level of the OFDM signal 104 may be reduced in the off-state of the OOK due to the loss in energy caused by setting the energy level of the proper subset of the predefined sub-carriers to zero.

In some embodiments, the transmitter 100 can be configured to increase in the off-state of the OOK an energy level of the sub-carriers of the OFDM signal 104 not corresponding to the proper subset 108 of the predefined sub-carriers 106 by a factor in order to compensate for the loss in energy caused by setting the energy level of the proper subset of the predefined sub-carriers to zero.

The sub-carriers of the OFDM signal 104 not corresponding to the proper subset 108 of the predefined sub-carriers 106 may include, besides the predefined sub-carriers 106 not corresponding to the proper subset 108 of the predefined sub-carriers 106, the other sub-carriers such as pilot sub-carriers.

In some embodiments, the OFDM signal 104 can comprise a sequence of OFDM symbols, wherein the content information 110 can comprise a sequence of content symbols. Thereby, the transmitter 100 can be configured to sequentially modulate the proper subset 108 of the predefined sub-carriers 106 in each OFDM symbol in accordance with the corresponding content symbol.

For example, the content information can comprise identifiers (e.g. a 1, 2, 3, 4, 5, 6, or more bit identifiers) indicating the data or message currently transmitted or scheduled for transmission via the OFDM signal 104. Moreover, the content information 110 can be gold coded so that the sequence of content symbols is a sequence of gold coded chips.

The payload information 102 can comprise blocks each of which is individually forward error corrected, wherein the blocks extend over a number of OFDM symbols, wherein a ratio between a number of predefined sub-carriers 106 and a number of the proper subset 108 of the predefined sub-carriers 106 is so that an error introduced by the OOK is correctable.

For example, the ratio between the number P of predefined sub-carriers 106 and the number S of the proper subset 108 of the predefined sub-carriers 106 (P : S) can be 10, 20, 30, 40, 50, 60, 70, 80, 90, 100, 150, 200, 300, 400, 500, 600, 700, 800, 900 or 1000.

As already mentioned, the payload information 102 can comprise a plurality of different messages or data to be transmitted. Thereby, each data or message can be packaged in a block or group of blocks and then be transmitted by the transmitter 100 via the OFDM signal 104.

Fig. 2 shows a block diagram of a mobile communication device 120 according to an embodiment of the present invention. The mobile communication device 120 comprises a wake-up receiver 122 configured to provide a wake-up signal 124 and an OFDM receiver 126 configured to receive payload information via an OFDM signal 104 in response to the wake-up signal 124, wherein predefined sub-carriers 106 of the OFDM signal 104 are modulated according to the payload information 102 and at least a proper subset 108 of the predefined sub-carriers 106 is also modulated according to a content information 110 related to a content of the payload information 102 dedicated for wake-up receivers of the payload information 102. The wake-up receiver 122 is configured to receive the content information 110 of the OFDM signal 104 and to provide the wake-up signal 124 for the OFDM receiver 126 if the content information 110 fulfills a predefined criteria.

As already described in detail, in embodiments, the payload information is transmitted via an OFDM signal by modulating predefined sub-carriers of the OFDM signal according to the payload information, wherein the content information 110 related to the content of the payload information 102 is transmitted via the OFDM signal 104 by modulating a proper subset 108 of the predefined sub-carriers 106 of the OFDM signal 104 additionally according to the content information 110. This enables the wake-up receiver 122, e.g. a low power wake-up receiver, of the mobile communication device 120 to receive the content information 110 of the OFDM signal 104 and to provide a wake-up signal 124 for the OFDM receiver 126 to receive the payload information 102 if the content information fulfills a predefined criteria.

In some embodiments, the proper subset 108 of the predefined sub-carriers 106 can be modulated according to the content information 110 using OOK. Thereby, the wake-up receiver 122 can be configured to detect an energy level of the proper subset 108 of the predefined sub-carriers 106 of the OFDM signal 104 in order to receive the content information 110.

Fig. 3 shows a block diagram of a wake-up receiver 122 according to an embodiment of the present invention. The wake-up receiver 122 is configured to receive the content information 110 of the OFDM signal 104 and to provide the wake-up signal 124 for the OFDM receiver 126 if the content information 110 fulfills the predefined criteria.

In some embodiments, the wake-up receiver 122 can comprise a band pass filter 130 the band pass of which covers the proper subset 108 of the predefined sub-carriers 106 of the OFDM signal 104 or a version thereof that is converted to system IF (IF = intermediate frequency) or the like.

As described above, the proper subset 108 of the predefined sub-carriers 106 can be at least one contiguous group of predefined sub-carriers such that the proper subset 108 of the predefined sub-carriers 106 is located in at least one frequency range. The band pass of the band pass filter 130 can cover the at least one frequency range in which the proper subset 108 of the predefined sub-carriers 106 is located.

In some embodiments, the wake-up receiver 122 can comprise a mixer 132 configured to convert the OFDM signal 104 towards a predefined frequency. For example, the mixer 132 can be configured to convert the OFDM signal 104 to an intermediate frequency in order to obtain a converted version of the OFDM signal 104, wherein the band pass of the band pass filter 130 covers a converted version of the proper subset 108 of the predefined sub-carriers 106 of the OFDM signal 104.

In some embodiments, the OFDM signal 104 can comprise a sequence of OFDM symbols, wherein the content information 110 comprises a sequence of content symbols, and wherein the proper subset 108 of the predefined sub-carriers 106 in each OFDM symbol is sequentially modulated in accordance with the corresponding content symbol. The wake-up receiver 122 can be configured to detect an energy level of the proper subset 108 of the predefined sub-carriers 106 in each OFDM symbol in order to receive the sequence of content symbols.

For example, the wake-up receiver 122 can comprise an energy level detector 134 and an OOK demodulator 136. The energy level detector 134 can be configured to detect an energy level of the proper subset 108 of the predefined sub-carriers 106 by detecting an energy of the band pass filtered OFDM signal 104 or an IF converted version thereof and to provide an energy level signal, e.g., a binary energy level signal, based on the detected energy level. The OOK demodulator 136 can be configured to OOK demodulate the energy level signal in order to obtain the sequence of content symbols.

The wake-up receiver 122 can comprise a correlator 138 configured to correlate the sequence of content symbols with a reference sequence of content symbols, wherein the content information fulfills the predefined criteria if the sequence of content symbols matches the reference sequence of content symbols.

Furthermore, the correlator 134 can be configured to provide the wake-up signal 124 for the OFDM receiver 126 if the sequence of content symbols matches the reference sequence of content symbols, e.g. stored in the correlator 134. According to some embodiments, the wake-up receiver 122 can comprise a correlator 134 having stored a reference sequence of content symbols for each message or data to be received by the OFDM receiver 126.

The content symbols can be gold coded so that the sequence of content symbols is a sequence of gold coded chips. Thereby, the wake-up receiver can comprise a gold code decoder configured to decode the sequence of gold coded chips in order to obtain the content information.

In some embodiments, the payload information can comprise blocks each of which is individually forward error corrected, wherein the blocks extend over a number of OFDM symbols, wherein a ratio between a number of predefined sub-carriers and a number of sub-carriers of the subset of predefined sub-carriers is so that an error introduced by the OOK is correctable. Thereby, the OFDM receiver 126 can configured to demodulate the sequence of OFDM symbols in order to obtain the blocks of the payload information, and to correct the error introduced by the OOK using the individual forward error correction of each block.

The above described transmitter 100 and/or mobile communication device 120 can be used to provide or enable an energy-efficient reception of payload information 102 in a communication system (or broadcast system). The communication system (or broadcast system) can comprise a plurality of communication (or broadcast) channels, wherein at least one of the plurality of communication channels can be used for transmitting the payload information 102 via the OFDM signal 104 from the transmitter 100 to the mobile communication device 120. Thereby, the energy efficient or low-power (wake-up) receiver 122 can be configured to select a channel of the communication (or broadcast) system, e.g., a DVB-T2 broadcast channel (DVB-T2 = Digital Video Broadcasting - Second Generation Terrestrial), and to map (or convert) the selected channel to an intermediate frequency band, e.g., as shown in Fig. 4.

Fig. 4 shows in a diagram a spectrum of three communication (or broadcast) channels 140_1 to 140_3 of a communication (or broadcast) system and a version converted to IF 142 of one of the three communication (or broadcast) channels 140_1 to 140_3. Thereby, the abscissa denotes the frequency, where the ordinate denotes the amplitude. As shown in Fig. 5, each channel of the three communication (or broadcast) channels 140_1 to 140_3 is used to transmit payload 102 information via an OFDM signal 104 so that predefined sub-carriers 106 of the OFDM signal 100 are modulated according to the payload information 102 and at least a proper subset 108 of the predefined sub-carriers 106 are modulated according to a content information 110 related to a content of the payload information 102.

As shown in Fig. 4 by way of example, the wake-up receiver 122 can be configured to select the second communication channel 140_2 of the three communication (or broadcast) channels 140_1 to 140_3 and convert this one to the intermediate frequency band 142. The subset 108 of the predefined sub-carriers 106 are the sub-carriers that are selected for the wake-up specific modulation and that are processed during demodulation by the energy efficient or low-power (wake-up) receiver 122, e.g., with a narrow band pass (or intermediate frequency filter) 130.

Further embodiments provide a method for energy efficient or energy reduced reception of data objects (e.g. data or messages) in a broadcast system, such as DVB-T2, having the following properties. First, a modified DVB-T2 waveform can be used, wherein a standard DVB-T2 reception is still possible. Second, the number of sub-carriers for the OOK modulation (or proper subset 108 of predefined sub-carriers 106) can be small compared to the number of sub-carriers (or predefined sub-carriers 106). Third, an increase of signal-to-noise ratio required for the modification is minor, e.g., smaller than 1 dB (or 2 dB, 3 dB, 4 dB or 5 dB). Fourthly, the number of sub-carriers is large enough and corresponds to a proper narrow intermediate frequency filter (or band pass filter) of the low power (wake-up) receiver 122. Fifthly, the low power (wake-up) receiver 122 can be configured to perform an OOK demodulation. Sixthly, the low power (wake-up) receiver 122 can be configured to monitor the radio channel or broadcast channel continuously. Seventhly, in a stand-alone operation the low power (wake-up) receiver 122 can provide a battery life of at least one year. Eighthly, the low power (wake-up) receiver 122 can be configured to receive and decode the modulated data by means of a Gold code decoder without switching on the main DVB-T2 receiver 126.

Fig. 5 shows a flow chart of a method 200 for transmitting according to an embodiment. The method 200 comprises the step 202 of transmitting payload information via an OFDM signal so that predefined sub-carriers of the OFDM signal are modulated according to the payload information and at least a proper subset of the predefined sub-carriers is also modulated according to an content information related to a content of the payload information and dedicated for wake-up receivers of the payload information.

Fig. 6 shows a flow chart of a method 204 for receiving payload information via an OFDM signal with an OFDM receiver in response to a wake-up signal provided by a wake-up receiver according to an embodiment. Thereby, predefined sub-carriers of the OFDM signal are modulated according to the payload information and at least a proper subset of the predefined sub-carriers is also modulated according to a content information related to a content of the payload information dedicated for wake-up receivers of the payload information. The method comprises the step 206 of receiving content information of the OFDM signal with the wake-up receiver and the step 208 of providing the wake-up signal with the wake-up receiver if the content information fulfills a predefined criteria.

The above described embodiments can be used to provide an energy-efficient reception of payload information 102 in a communication system or broadcast system. In the following, an approach to receive broadcasted data objects (e.g., data or messages) from a data carousel under extreme low power conditions demanded by mobile devices 120 - like smartphones - to save battery life is described. The method is demonstrated for the DVB-T2 system using an integrated ultra low current wake-up receiver 122. As will be described in further detail below, the performed simulation suggests that an increased SNR of 0.3 dB (SNR = signal-to-noise ratio) may be required to decode the modified DVB-T2 waveform. On the other side, this allows for continuous listening for carousel objects at the receiver side. During listening mode the wake-up receiver 122 consumes 230 $\mu$A at 3 V for the simulated configuration.

Recent examples demonstrate that the growing popularity of smartphones is stretching mobile phone networks to their limits [J. Wortham, "Customers Angered as iPhones Overload AT&T," The New York Times, no. New York Edition, p. B1, 03.09.2009]. Next generation networks like LTE Advanced may provide a temporary solution to handle the immense data volume generated by mobile devices. However on the long term, it is most likely that mobile phone networks must also be alleviated by off-loading the distribution of mass data to dedicated broadcast systems.

Based upon a common solution to off-load data delivery to a broadcast system, embodiments propose a concept with a strong focus on energy-efficiency. The approach is demonstrated in the context of the DVB-T2 system [European Telecommunications Standards Institute (ETSI), "European Telecommunications Standards Institute (ETSI): Digital Video Broadcasting (DVB); Frame Structure Channel Coding and Modulation for a Second Generation Digital Terrestrial Television Broadcasting System (DVB-T2)," 2009-09] as the broadcast bearer. Though, it may also be adapted to other OFDM based transmission systems.

To ease convergence of the distribution networks it is herein assumed that the off-loaded data is segmented into data objects that shall be broadcasted. This technique - so-called file transfers - is already widely used to deliver e.g. non-linear media content [F. Beer, A. Mull, and C. Forster, "A framework for nonlinear broadcasting using web technologies," in Conference proceedings (R. Kays, ed.), (Dortmund), pp. 1-4, Informatik Centrum Dortmund, 2011], personalized services [A. Gil, F. Fraile, M. Ramos, I. Fez, and J. Guerri, "Personalized multimedia touristic services for hybrid broadcast/broadband mobile receivers," IEEE Transactions on Consumer Electronics, vol. 56, no. 1, pp. 211-219, 2010], telemetry or supplementary data [A. Mull, F. Beer, S. Urquijo, and L. Patiño-Studencka, "Assisting a global navigation satellite system using a local broadcast network," in Proceedings IEEE International Symposium on Broadband Multimedia Systems and Broadcasting (BMSB 2011), pp. 327-332, Institute of Electrical and Electronics Engineers (IEEE), 2011]. As successful reception of these data objects cannot easily be determined by the transmitter 100, it is a common method to intentionally organize the data objects into carousel structures and broadcast them in a continuous loop, e.g. presented in [Internet Engineering Task Force (IETF), "Internet Engineering Task Force (IETF): FLUTE - File Delivery over Unidirectional Transport," 2004-10], [European Telecommunications Standards Institute (ETSI), "European Telecommunications Standards Institute (ETSI): Digital Video Broadcasting (DVB); DVB Specification for Data Broadcasting," 2004-06], and [Hongguang Zhang, Tianpu Jiang, Zhiqi Gu, and Shibao Zheng, "Design and implementation of broadcast file system based on DSM-CC data carousel protocol," IEEE Transactions on Consumer Electronics, vol. 50, no. 3, pp. 929-933, 2004].

If the receiver needs to receive all objects from a static carousel this process is straightforward. However, receiving just a small and arbitrary sub-set of the carousel or receiving objects from a highly dynamic carousel in a way that saves as much energy as possible imposes more complicated requirements. The complexity increases even further if receivers need to minimize update delays. Legacy systems try to solve this problem by optimizing the carousel's indexing data structures [T. Imielinski, S. Viswanathan, and B. Badrinath, "Data on air: organization and access," IEEE Transactions on Knowledge and Data Engineering, vol. 9, no. 3, pp. 353-372, 1997] to minimize "tuning" time or to improve the playout sequence to optimize latency on access time [S. Acharya, R. Alonso, M. Franklin, and S. Zdonik, "Broadcast disks: data management for asymmetric communication environments," in Proceedings of the 1995 ACM SIGMOD International Conference on Management of Data (M. Carey, ed.), vol. 24,2, (New York and NY), pp. 199-210, ACM Press, 1995].

Some embodiments provide an approach to optimize the receiver's (or mobile communication device 120) energy consumption under these conditions. The method (heavily) depends on a low bitrate physical side channel that announces upcoming carousel updates. This enables the reception of a certain sub-set of the carousel objects by first monitoring this side channel. During this period the main DVB-T2 receiver 126 can be deactivated. Any time a relevant object is announced on the side channel the main receiver 126 can be re-activated to receive the object. Power saving can be achieved from the fact that this side channel can be received and decoded in an extremly energy-efficient manner with very short ahead-of-time notification.

Fig. 7 shows a block diagram of a broadcast system 150 comprising a transmitter 100 and a mobile communication device 120 according to an embodiment. In other words, Fig. 7 depicts the building blocks of the proposed reference system 150.

The transmitter 100 can comprise at least one carrousel manager 151 configured to provide the payload information 102, and an update manager 152 configured to provide the content information 110 related to the content of the payload information 102. As described in detail above, the transmitter 100 can be configured to transmit payload information 102 via an OFDM signal 104 so that predefined sub-carriers 106 of the OFDM signal 104 are modulated according to the payload information 102 and at least a proper subset 108 of the predefined sub-carriers 106 is also modulated according to a content information 110 of the payload information 102 and dedicated for wake-up receivers of the payload information 102.

The mobile communication device 120 can comprise the (ultra-low-power) wake-up receiver 122 configured to provide a wake-up signal 124 and the OFDM receiver 126, e.g., a DVB-T2 receiver, configured to receive the OFDM signal 104 in response to the wake-up signal 124. The wake-up receiver 122 can be configured to receive the content information 110 of the OFDM signal 104 and to provide the wake-up signal 124 for the OFDM receiver 126 if the content information 110 fulfills a predefined criteria.

In addition, the mobile communication device can comprise a carousel receiver 154 configured to receive data 156 from the OFDM receiver 126 and to provide carousel objects 158 based on the data 156 and an activity indicator 158. The wake-up receiver 122 can comprise an activity manager 156 configured to receive update notifications 160 from the wake-up receiver 122 and to provide the activity indicator (or wake-up signal) 124 based on the update notifications 160 and a wake-up ID 162 received from the carousel receiver 154. As shown in Fig. 7, the activity manager 156 can also be implemented externally to the wake-up receiver 122.

The system 150 can employ one or more data sources to broadcast file objects available to the receivers (or mobile communication devices 120). These data sources may be implemented using standard carousel methods like those presented in [European Telecommunications Standards Institute (ETSI), "European Telecommunications Standards Institute (ETSI): Digital Video Broadcasting (DVB); DVB Specification for Data Broadcasting," 2004-06] and [Internet Engineering Task Force (IETF), "Internet Engineering Task Force (IETF): FLUTE - File Delivery over Unidirectional Transport," 2004-10]. To allow a receiver (or mobile communication device 120) to closely track the objects that are transmitted by these carousels 151 the receiver (or mobile communication device 120) can follow updates of the carousel structure. In embodiments, a separate notification sub-system can be used to inform receivers (or mobile communication devices 120) of carousel updates. This notification sub-system comprises the update manager 152, the update channel, the ultra low power wake-up receiver 122, and the activity manager 156.

Starting on the transmitter side 100 the update manager 152 can be configured to emit update notification (or content information) 110 that reflect the state of all data carousels 151. These update notifications (or content information) 110 are then broadcast in band. The characteristics of the notification channel are presented in greater detail below. Finally, on the receiver side 120 all update notifications are decoded by an ultra low power wake-up receiver 122 which can be configured to forward the data to the activity manager 156. If the activity manager 156 detects a message that is significant for its receiver (or mobile communication device 120) it signals activity to the main DVB-T2 receiver 126, e.g., by means of the wake-up signal 124, to start decoding of the entire DVB-T2 multiplex bit stream 104. To enable for a quick start of the main receiver it may utilize cached multiplex signalisation which has been received earlier. The corresponding data object can then be extracted and processed by the carousel receiver 154.

Depending on the capabilities of the overlaying carousel 151 there the notification system can be used in two different ways. First, signaling of individual data objects. Each data object delivered through one of the available carousels can be assigned an unique ID. Each time an object is transmitted on the broadcast channel its ID can be also signalled on the notification channel. A receiver 126 that is interested in receiving a specific object may sleep until the ID of the associated object is detected. Second, more sophisticated carousels 151 may signal scheduled transmission times for their data object through their own index structure, thus rendering the notification of individual objects unnecessary. For those objects the notification channel can be used (best) to signal updates of the carousel index.

In that case a receiver 126 will start by receiving the carousel's index structure and may then sleep until the index changes which will be signaled by means of the proposed notification system.

The second method may be considered more advanced as it reduces the number of messages that need to be transmitted by the notification system. Subsequently, it is thus assumed that this method will be used by the delivery system 150.

Subsequently, the wake-up receiver 122 is described. The core concepts to form the side channel reception are based on an ultra low current wake-up receiver 122 [H. Milosiu, F. Oehler, and M. Eppel, "Sub-10 uA data reception with low latency using a 180-nm CMOS wake-up receiver at 868 MHz," in 2011 Semiconductor Conference Dresden (SCD 2011) (Institute of Electrical and Electronics Engineers, ed.), pp. 1-4, 2011]. For example, according to some embodiments, the wake-up receiver can be implemented in an ASIC (ASIC = application-specific integrated circuit) and can operate as continuous radio monitoring receiver with a typical current consumption of, e.g., 13.6 $\mu$A at 3.0 volts supply.

The wake-up receiver ASIC can be fabricated in a low-cost 0.18 $\mu$m CMOS technology (CMOS = complementary metal-oxide-semiconductor). It can perform continuous listening to radio signals and can detect a defined set of signal patterns. The wake-up radio (or wake-up receiver) 122 can be used as an ultra low current additional wireless receiver 122 while other components within the receiver module (or mobile communication device) 120 are suspended.

The wake-up radio (or wake-up receiver) 122 can comprise a superheterodyne receiver whose analogue output signal can be discretized and processed in a digital correlator 138. If the received sequence information matches the reference sequence, a digital control signal 124 can be generated. The implemented receiver (or wake-up receiver) 122 can comprise multiple separate correlators 138 scanning for wake-up sequences. The sequence recognition is fault-tolerant. That is, recognition remains correct even if multiple bits in the received, e.g., 31-bit pattern are erroneous.

In the following, signaling of the wake-up sequence is described. The method is based on a modified and enhanced wake-up radio (or wake-up receiver) 122 that offers DVB-T2 channel selection. Although it would be possible to locate the signal within the guard band to reduce interference, the method according to some embodiments focuses on the case of overlapping signals. Thus, a small part of the DVB-T2 OFDM waveform is modulated by the wake-up signal (or content information) 110.

Fig. 8 shows in a diagram a power spectrum of an OFDM signal 104 according to an embodiment. Thereby, the abscissa denotes the frequency, where the ordinate denotes the power. Predefined sub-carriers 106 of the OFDM signal 104, e.g., a DVB-T2 signal, are modulated according to the payload information 102, wherein at least a proper subset 108 of the predefined sub-carriers 106 is also modulated according to a content information 110 of the payload information 102. In other words, Fig. 8 shows a spectral placement of the wake-up signal (or content information) 110 with respect to the DVB-T2 OFDM waveform.

It is noteworthy that the DVB-T2 pilot pattern structure also can be modified by the wake-up sequence, thus affecting the channel estimation. Regarding the DVB-T2 signal 104, the LDPC and BCH coding (LDPC = low-density parity-check; BCH = Bose-Chaudhuri-Hocquenghem-code) included in the baseband frames will fix occurring distortions. However, the overall error performance of the DVB-T2 transmission will still slightly decrease resulting in an increased minimum C/N (signal-to-noise ratio) for quasi-error-free reception. The low bit-rate transmission can be formed by using a set of different correlation sequences for spreading the notification bits. Each sequence can comprise 31 chips. Each chip can be mapped onto one OFDM symbol. By applying Gold codes, it is possible to use 33 sequences for effective and fault-tolerant transmission of five notification data bits [H. D. Lüke, Korrelationssignale: Korrelationsfolgen und Korrelationsarrays in Nachrichten- und Informationstechnik, Meßtechnik und Optik. Berlin: Springer, 1992]. Gold codes still exhibit the minimum cross-correlation attribute such as optimum m-sequences [R. Gold, "Optimal binary sequences for spread spectrum multiplexing (Corresp.)," IEEE Transactions on Information Theory, vol. 13, no. 4, pp. 619-621, 1967]. The digital correlator of the wake-up radio (or wake-up receiver) 122 can be implemented with XNOR gates. The received Gold sequences maintain discriminable at a bit error tolerance of three out of thirty-one bits in worst case. This corresponds to a bit error rate of 9.7 %.

Fig. 9 shows a block diagram of a wake-up receiver 122 for decoding Gold codes according to an embodiment. The wake-up receiver 122 can comprise an analogue RF receiver front-end 170, a quantizer 172, a time discretizer 174, a 32 bit Gold code correlator bank 176 and a 5 bit symbol generator 178. In other words, Fig. 9 shows a wake-up radio 122 data decoding scheme with Gold codes. Thereby, a subset of 32 out of 33 Gold codes is assumed.

Transmitting ten Gold sequences, a 50 bit data packet can be encoded. Fig. 10 shows in a table a transmit bit length, a wake-up current, a data rate and a packet length for three different FFT modes. In other words, Fig. 10 shows in a table the achievable net data rates for three different FFT modes. For this purpose, a 500 kHz channel bandwidth for the wake-up signal was assumed. Choosing the 32k FFT mode, the 50 bits notification packet can be received within 1.208 seconds with a current consumption as low as 18 μA at 3 V supply voltage.

Subsequently, the packet layer is described. To distinguish the various updateable data objects each one may get assigned a unique identification. ID allocation can be performed at the transmitter side 100. The managed data sources 151 may be entire carousels or just data objects within such. To build a logical layer on top of the wake-up receiver a packet format with elements as depicted in the table shown in Fig. 11 is introduced. Using this format, received frames can be matched with parallel shift registers by preamble and valid checksum. The cyclic redundancy check is to be performed only on complete packet reception.

With this data delivery concept there is still a rare chance to recognize a packet where none is. Very seldom, this may trigger an unnecessary activation of the main receiver 126.

The presented packet structure results in a packet length of $l_p = 50 bit/pkt$. The wake-up receiver can spread each information bit over a number of chips which are mapped to OFDM symbols: $l_b = \frac{31chip}{5bit}$. With the symbol rate $r_s$ which can be derived from the elementary parameters $T$, $T_U$, and $\Delta$, finally, the packet rate can be defined:

$$r_s = \frac{1}{T_U + \Delta} sym$$

$$r_p = r_s \cdot \frac{1}{l_p} \cdot \frac{1}{l_b}$$

Thus, the wake-up receiver's packet rate can be defined using bandwidth, FFT mode and guard interval.

Fig. 12 shows in a diagram paket rates of selected DVB-T2 modes in dependence on the FFT modes. Thereby, the abscissa denotes the FFT modes, wherein the ordinate denotes the packet rates in packets per second. In other words, Fig. 12 shows the packet rates for the parameter set of an 8 MHz channel.

Subsequently, in-band effects of the wake-up sequence to DVB-T2 are described. The DVB-T2 standard describes how the sub-carriers of an OFDM signal 104 are generated from signal constellation symbols. Between such payload sub-carriers, there are pilot sub-carriers for channel estimation in the receiver 126. In embodiments, the standard DVB-T2 generation of the sub-carriers is modified in a way that a block of a given number $N_B$ of sub-carriers (payload plus pilots; or proper subset 108 of predefined sub-carriers 106) is either switched on or off by the current wake-up code sequence. "On" means that the sub-carriers remain unaltered, "off" means that the sub-carrier values are set to zero. Each chip of the correlation sequence thus determines the switching on or off of the block 108 for one OFDM symbol. Therefore, the wake-up modulation means basically that each chip OOK-modulates a sub-carrier block 108 in an OFDM symbol.

When the block is switched off, the energy of the OFDM symbol drops by a factor $(N_u - N_B)/N_u$, where $N_u$ is the number of used (= occupied) sub-carriers in a T2 OFDM symbol. Therefore, in order to achieve an approximately equal symbol energy, all remaining sub-carriers are amplified by a factor $N_u/(N_u - N_B)$ in the propsed scheme, whenever the block 108 is switched off. At the (activated) receiver side, it is quite simple to achieve a reliable detection, whether the block 108 is on or off in the current OFDM symbol by measuring the block's 108 received energy. If the block 108 is on, a conventional DVB-T2 signal processing is carried out, while it has to be taken into account in the channel estimation when the block 108 is off: The channel estimation knows that all pilots inside the block 108 have been set to zero at the transmitter 100 and that the pilots outside the block 108 are stronger by a factor $N_u(N_u - N_B)$ compared to other symbols where the block 108 is on. Similarly, the receiver 126 knows that all payload sub-carriers inside the block should be considered as erasures while the SNR of the remaining payload sub-carriers is higher by the same factor $N_u/(N_u - N_B)$.

So the DVB-T2 signal 104 will face small distortions from erasing some payload sub-carriers. On the other hand, other payload sub-carriers will profit from the increased SNR. Thanks to the time and frequency interleaving, the LDPC and BCH coding included in the baseband frames will fix these distortions. Yet, the overall error performance of the DVB-T2 transmission will slightly decrease resulting in an increased minimum C/N for quasi error free reception.

For the simulation of the concept the Common Simulation Platform (CSP) was employed. It was developed as open software inside the DVB project for the "Validation and Verification Task Force" of the DVB-T2 standardisation. The setup uses a typical DVB-T2 configuration gathered from [N. Burch, "Oxford Digital Switchover and DVB-Apps," 2011]: 8 MHz bandwidth, FFT size 2k, guard interval ratio 1/4, transmission of a single PLP with 64-QAM, code rate 2/3, and long FEC blocks of 64 kbit, 332 OFDM symbols compose one DVB-T2 frame (i.e. approx. 80 ms per T2 frame), 1 time interleaving block is over 1 DVB-T2 frame. In the middle of the $N_u$ = 1705 used sub-carriers, a block 108 of $N_B$ =112 sub-carriers (i.e. 500 kHz) was switched on and off according to the wake-up sequences.

A continuous transmission of code sequences is assumed, i.e. the next code sequence starts immediately after the end of the previous sequence. The transmission of one chip of a code sequence lasts as long as one OFDM symbol, i.e. approx. 250 μs. For this configuration, two types of channels were simulated. First, the global best case channel which is the static flat AWGN channel (AWGN = Additive white Gaussian noise). Second, the static 0 dB echo channel usually considered as one of the worst case channels.

Fig. 13 shows in a diagram the simulation results of DVB-T2 bit error rates in dependence on signal-to-noise ratios and communication channels. Thereby, the abscissa denotes the signal-to-noise ratio in dB, where the ordinate denotes the bit error rate. Moreover, a first curve 180 denotes the bit error rate of DVB-T2 for the 0 dB echo channel whithout the wake-up sequence. A second curve 182 denotes the bit error rate of DVB-T2 for the 0 dB echo channel whith the wake-up sequence. A third curve 184 denotes the bit error rate of DVB-T2 for the AWGN channel whithout the wake-up sequence. A fourth curve 182 denotes the bit error rate of DVB-T2 for the AWGN channel whith the wake-up sequence.

In other words, Fig. 13 shows the bit error rate (BER) simulation results. It displays both simulation scenarios, i.e. the pure AWGN channel and the 0 dB echo channel. The BER is plotted over varying signal-to-noise (SNR) ratios $E_5/N_0 = C/N$. The simulation utilized the configuration is described above.

The chart depicts that embedding the wake-up sequence into the DVB-T2 waveform requires an increase in the minimum SNR of approximately 0.3 dB compared to a standard DVB-T2 signal with identical configuration. This figure relates to reaching a "quasi-error-free" (QEF) reception condition as defined in [European Telecommunications Standards Institute (ETSI), "European Telecommunications Standards Institute (ETSI): Digital Video Broadcasting (DVB); Frame Structure Channel Coding and Modulation for a Second Generation Digital Terrestrial Television Broadcasting System (DVB-T2)," 2009-09]. This observation holds for both the AWGN channel (left-hand side of the chart) and the 0 dB echo channel (right-hand side).

Thus, due to the available channel coding that is utilized by DVB-T2, the wake-up sequence can be embedded without any loss or corruption of payload data as long as the SNR is sufficiently high at the receiver side.

As already detailed before, the net data rate of the wake-up signalling channel depends on the chosen DVB-T2 FFT mode. According to Fig. 10 the simulated wake-up channel achieves a data rate of 720 bit/s consuming approximately 230 μA (at 3 V) while decoding the wake-up channel.

Some embodiments provide an approach to receive parts (i.e. data objects) of a DVB-T2 multiplex bit stream using extremly low energy while the receiver 126 waits for the desired content. The proposed concept is inspired by a wake-up receiver ASIC that is focusing the 868 MHz band. The performed simulation shows that a legacy DVB-T2 waveform can be modulated by the wake-up sequence as required by the receiver ASIC. To decode this compound waveform a receiver typically requires a 0.3 dB higher SNR to achieve a QEF decoding condition compared to an unmodified signal.

On the other hand the embedded wake-up sequence allows for continuous update notifications available to the receiver (or mobile communication device) 120. Thus, the reception of specific data objects can be achieved with drastically reduced power consumption. For the simulated waveform the wake-up receiver 122 requires approximately 230 μA at 3 V while continuously listening for update notifications.

Hence, some embodiments demonstrate the feasibility of an ultra low current wake-up concept dedicated for the DVB-T2 system.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Transmitter (100) configured to transmit payload information (102) via an OFDM signal (104) so that predefined sub-carriers (106) of the OFDM signal (104) are modulated according to the payload information (110) and at least a proper subset (108) of the predefined sub-carriers (106) is also modulated according to a content information (110) related to a content of the payload information (102) and dedicated for wake-up receivers of the payload information (102).

**2.** Transmitter (100) according to claim 1, wherein the transmitter (100) is configured to modulate the proper subset (108) of the predefined sub-carriers (106) according to the content information (110) using OOK.

**3.** Transmitter (100) according to claim 2, wherein in an on-state of the OOK an energy level of the proper subset (108) of the predefined sub-carriers (106) remains unaltered, and wherein in an off-state of the OOK the energy level of the proper subset (108) of the predefined sub-carriers (106) is set to zero.

**4.** Transmitter (100) according to claim 3, wherein in the off-state of the OOK an energy level of the subcarriers of the OFDM signal (104) not corresponding to the proper subset (108) of the predefined subcarriers (106) is increased by a factor in order to compensate for a loss in energy caused by setting the energy level of the proper subset (108) of the predefined sub-carriers (106) to zero.

**5.** Transmitter (100) according to one of the claims 1 to 4, wherein the OFDM signal (104) comprises a sequence of OFDM symbols, wherein the content information (102) comprises a sequence of content symbols, and wherein the transmitter (100) is configured to sequentially modulate the proper subset (108) of the predefined sub-carriers (106) in each OFDM symbol in accordance with the corresponding content symbol.

**6.** Transmitter (100) according to claim 5, wherein the payload information (102) comprises blocks each of which is individually forward error corrected, wherein the blocks extend over a number of OFDM symbols, wherein a ratio between a number of predefined sub-carriers (106) and a number of sub-carriers of the subset (108) of predefined sub-carriers is so that an error introduced by the OOK is correctable.

**7.** Mobile communication device (120), comprising:

a wake-up receiver (122) configured to provide a wake-up signal (124); and
an OFDM receiver (126) configured to receive payload information (102) via an OFDM signal (104) in response to the wake-up signal, wherein predefined sub-carriers (106) of the OFDM signal (104) are modulated according to the payload information (102) and at least a proper subset (108) of the predefined sub-carriers (106) is also modulated according to a content information (110) related to a content of the payload information (102) dedicated for wake-up receivers of the payload information (102);
wherein the wake-up receiver (122) is configured to receive the content information (110) of the OFDM signal (104) and to provide the wake-up signal (124) for the OFDM receiver (126) if the content information (110) fulfills a predefined criteria.

**8.** Mobile communication device (120) according to claim 7, wherein the proper subset (108) of the predefined sub-carriers (106) is modulated according to the content information (110) using OOK; and wherein the wake-up receiver (122) is configured to detect an energy level of the proper subset (108) of the predefined sub-carriers (106) of the OFDM signal (104) in order to receive the content information (110).

**9.** Mobile communication device (120) according to claim 7 or 8, wherein the wake-up receiver (122) comprises a band pass filter (130) the band pass of which covers the proper subset (108) of the predefined sub-carriers (106) of the OFDM signal (104) or an IF converted version thereof.

**10.** Mobile communication device (120) according to one of the claims 7 to 9, wherein the OFDM signal (104) comprises a sequence of OFDM symbols, wherein the content information (110) comprises a sequence of content symbols, and wherein the proper subset (108) of the predefined sub-carriers (106) in each OFDM symbol is sequentially modulated in accordance with the corresponding content symbol; wherein the wake-up receiver (122) is configured to detect an energy level of the proper subset (108) of the predefined sub-carriers (106) in each OFDM symbol in order to receive the sequence of content symbols.

**11.** Mobile communication device (120) according to claim 10, wherein the wake-up receiver (122) comprises a correlator (138) configured to correlate the sequence of content symbols with a reference sequence of content symbols, wherein the content information (110) fulfills the predefined criteria if the sequence of content symbols matches the reference sequence of content symbols.

**12.** Mobile communication device (120) according to claim 10, wherein the payload information (102) comprises blocks each of which is individually forward error corrected, wherein the blocks extend over a number of OFDM symbols, wherein a ratio between a number of predefined sub-carriers (106) and a number of sub-carriers of the subset of predefined sub-carriers (106) is so that an error introduced by the OOK is correctable;
wherein the OFDM receiver (126) is configured to demodulate the sequence of OFDM symbols in order to obtain the blocks of the payload information (102), and to correct the error introduced by the OOK using the individual forward error correction of each block.

**13.** Method for transmitting payload information via an OFDM signal so that predefined sub-carriers of the OFDM signal are modulated according to the payload information and at least a proper subset of the predefined sub-carriers is also modulated according to an content information related to a content of the payload information and dedicated for wake-up receivers of the payload information.

**14.** Method for receiving payload information via an OFDM signal with an OFDM receiver in response to a wake-up signal provided by a wake-up receiver, wherein predefined sub-carriers of the OFDM signal are modulated according to the payload information and at least a proper subset of the predefined sub-carriers is also modulated according to a content information related to a content of the payload information dedicated for wake-up receivers of the payload information, wherein the method comprises the step of:

> receiving content information of the OFDM signal with the wake-up receiver; and
> providing the wake-up signal with the wake-up receiver if the content information fulfills a predefined criteria.

**15.** Computer program having a program code for performing, when running on a computer or microprocessor, a method according to one of the claims 13 or 14.

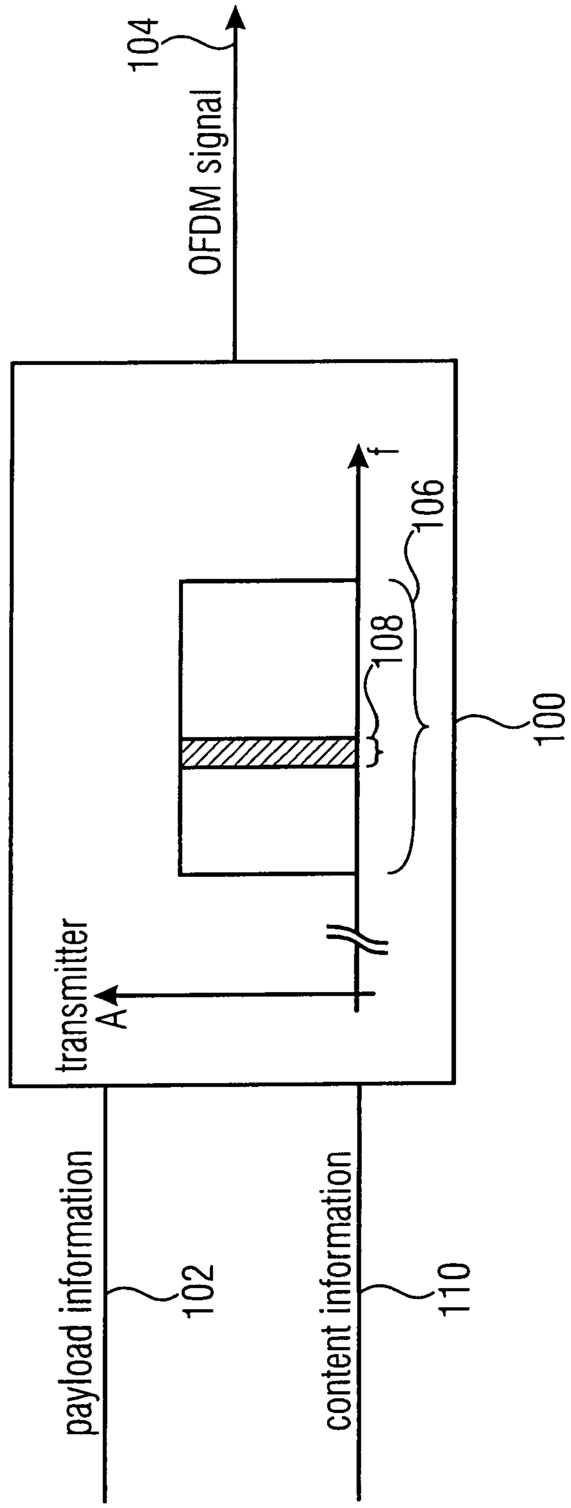
104
OFDM signal
transmitter
A
f
106
108
100
payload information
102
content information
110

FIGURE 1

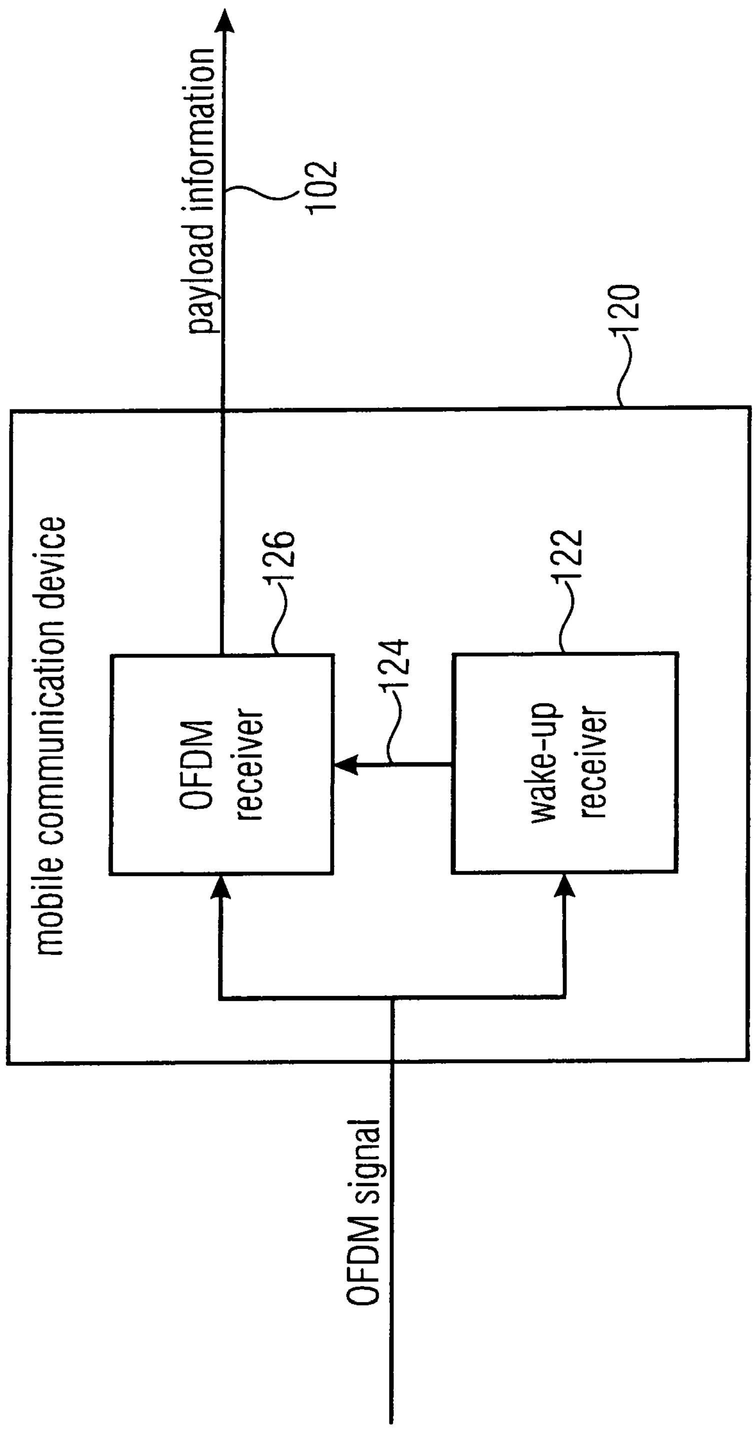
payload information
102
120
mobile communication device
126
OFDM receiver
124
122
wake-up receiver
OFDM signal

FIGURE 2

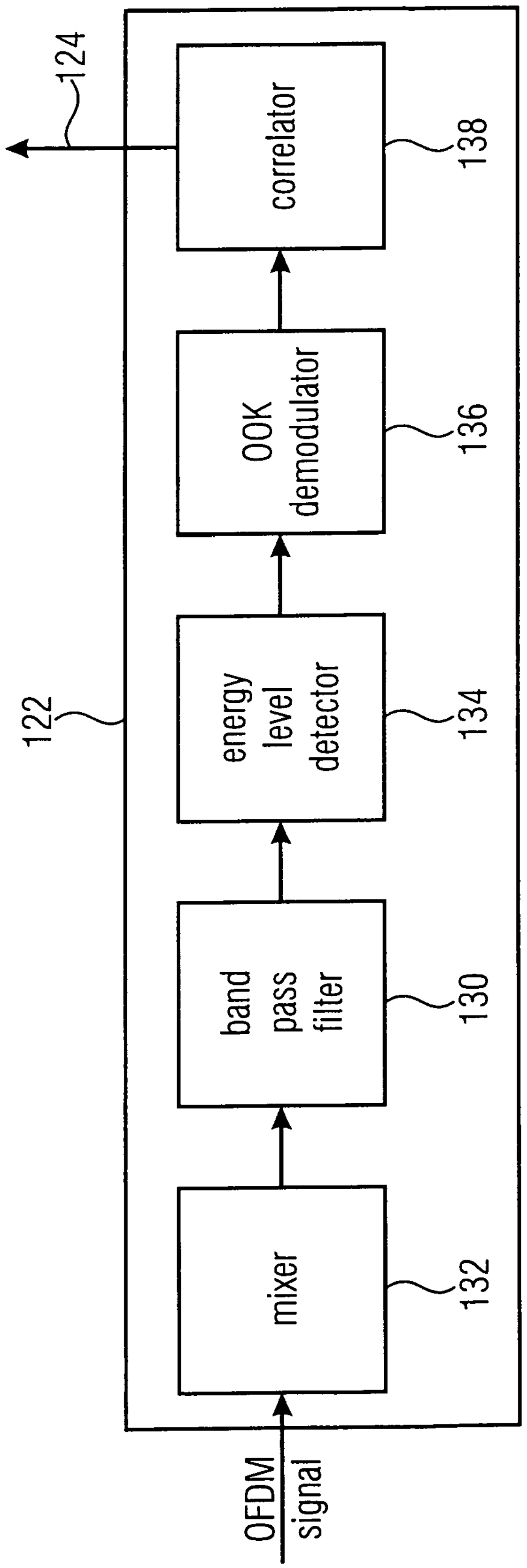
124
correlator
138
OOK
demodulator
136
122
energy
level
detector
134
band
pass
filter
130
mixer
132
OFDM
signal

FIGURE 3

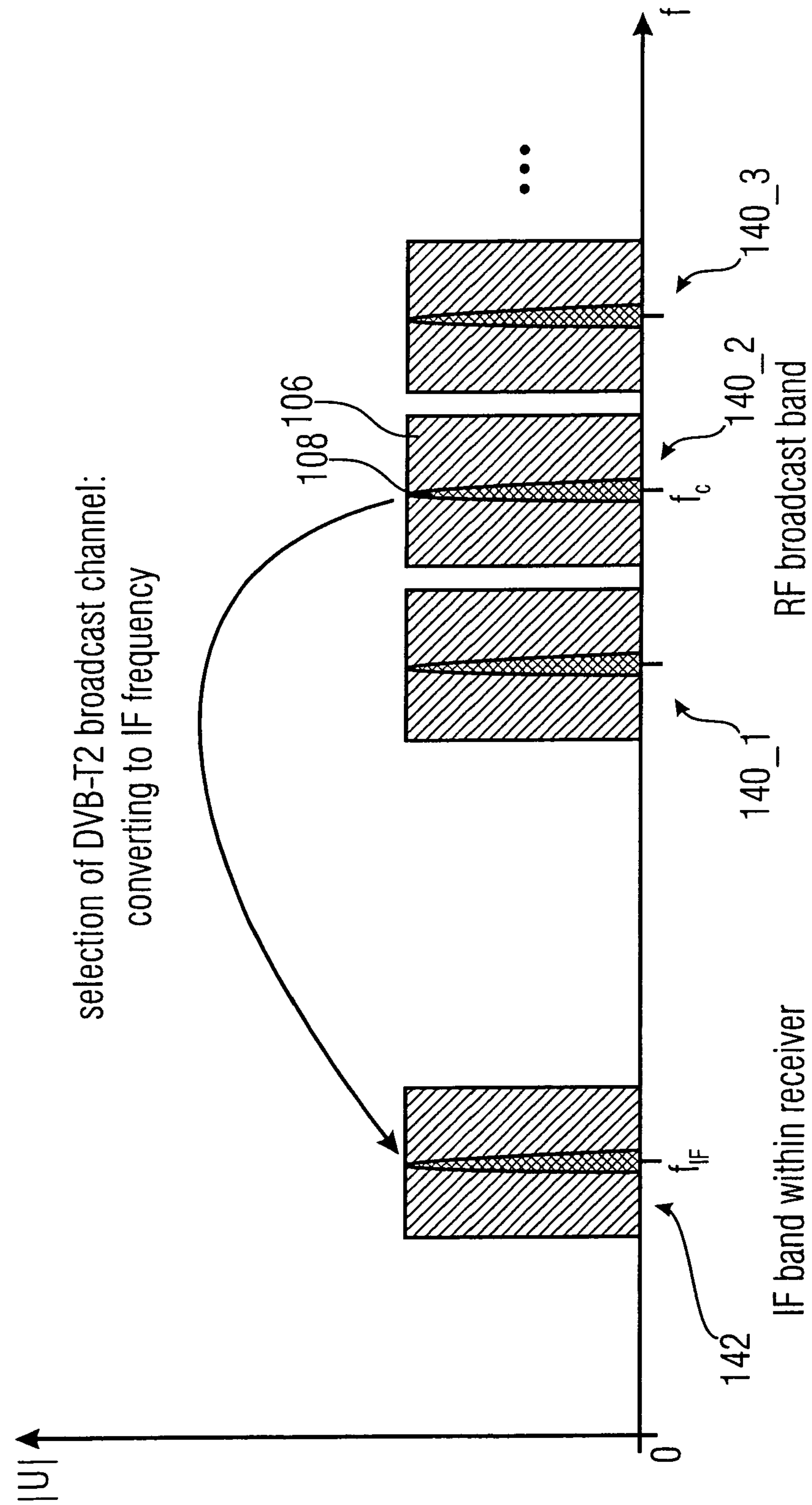
selection of DVB-T2 broadcast channel:
converting to IF frequency
|U|
0
f
108
106
$f_c$
$f_{IF}$
140_1
140_2
140_3
142
IF band within receiver
RF broadcast band

FIGURE 4

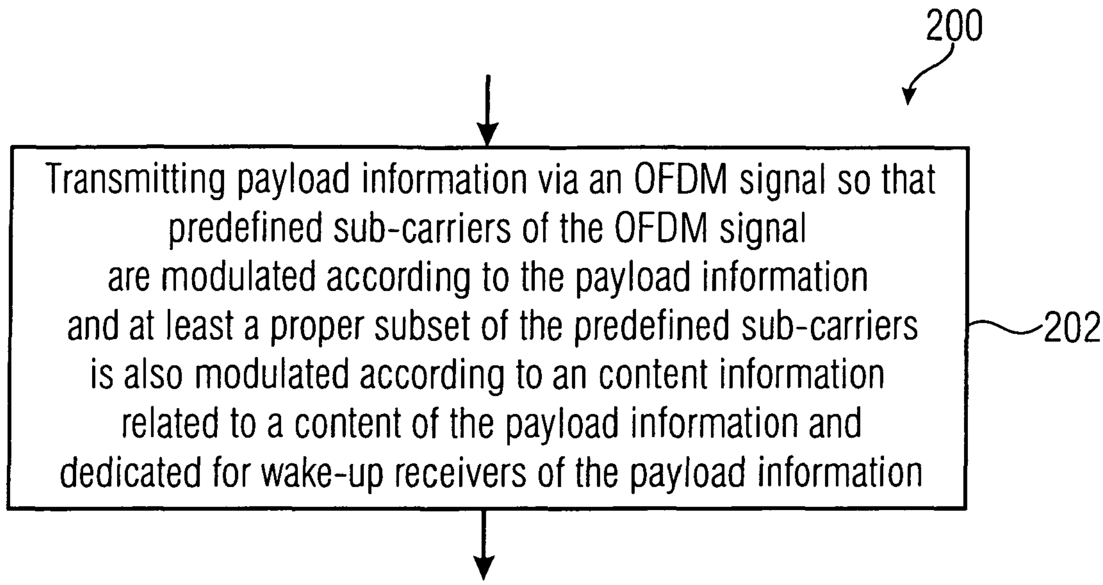


FIGURE 5

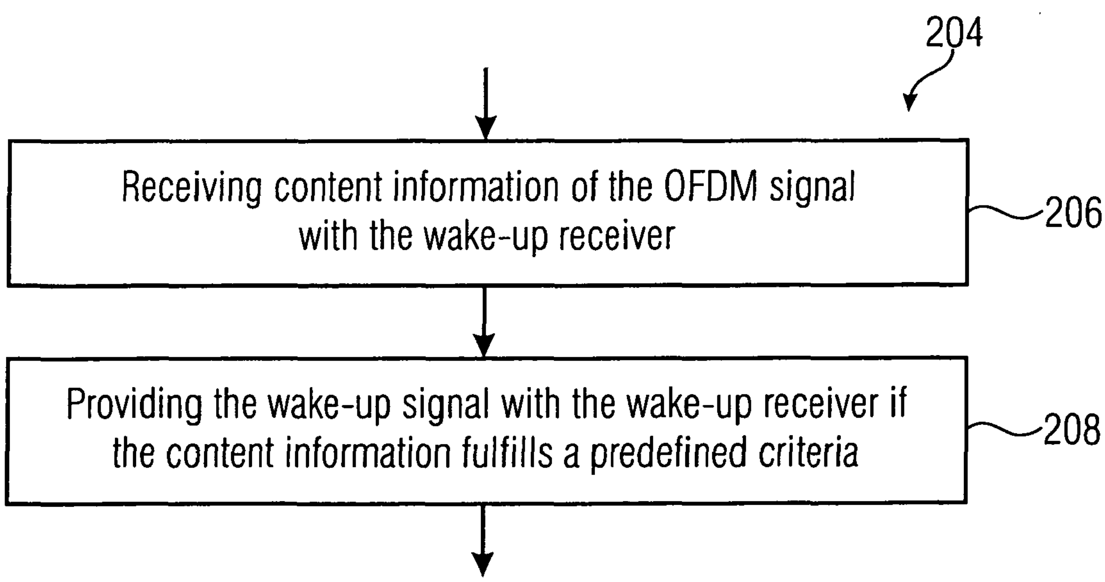


FIGURE 6

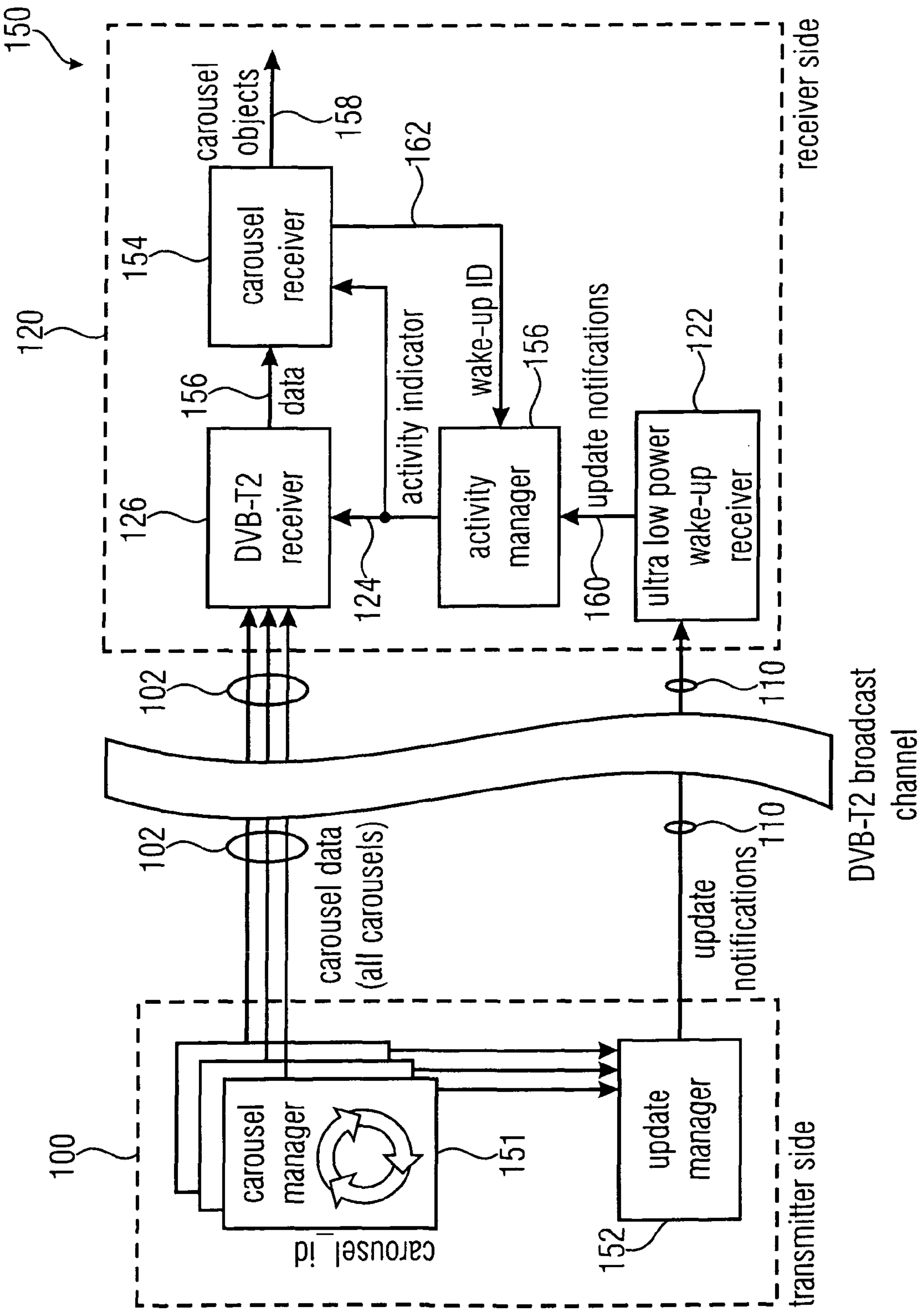
150
120
100
receiver side
transmitter side
carousel objects
158
162
154
carousel receiver
156
data
126
DVB-T2 receiver
activity indicator
wake-up ID
156
activity manager
124
update notifcations
160
122
ultra low power wake-up receiver
102
110
DVB-T2 broadcast channel
carousel data (all carousels)
update notifications
carousel manager
151
carousel_id
update manager
152

FIGURE 7

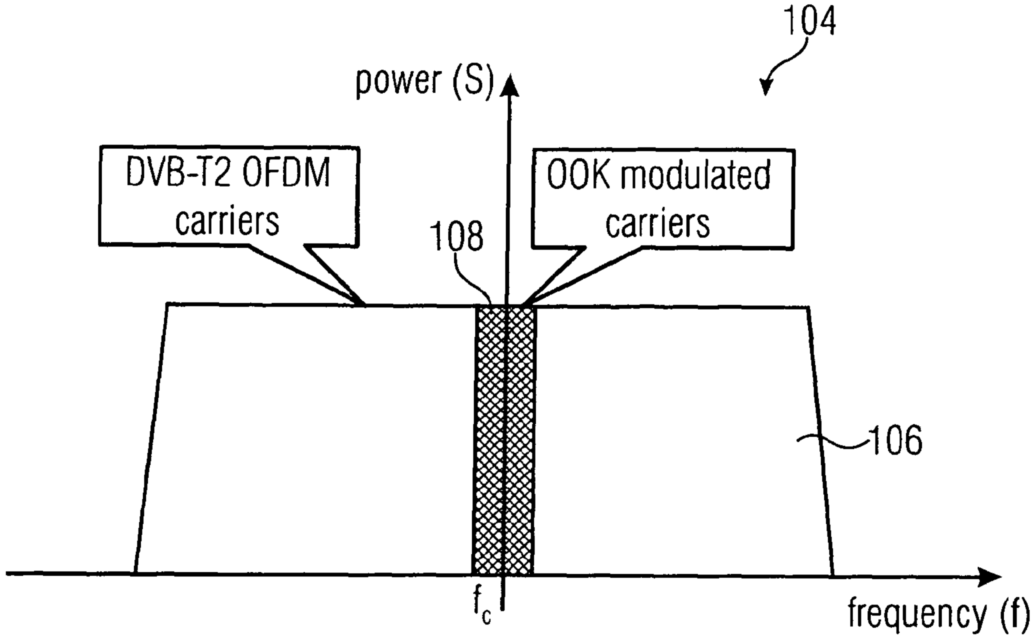


FIGURE 8

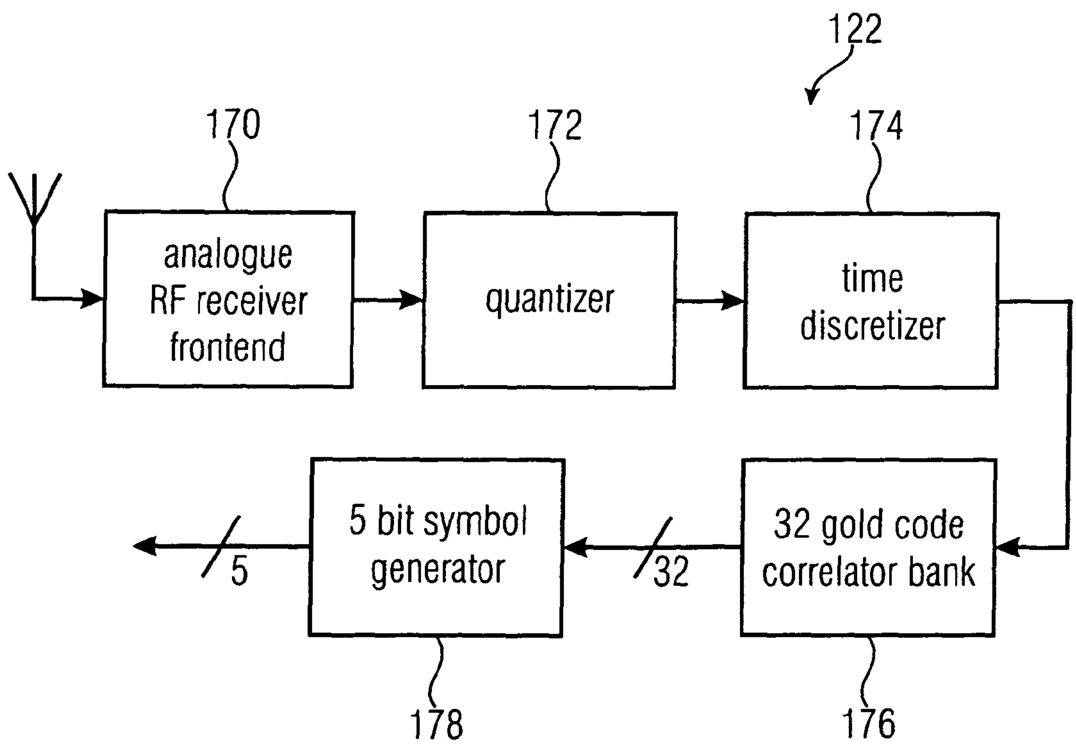


FIGURE 9

| Mode | TX bit length | Wake-up current | Data rate | Packet length |
|---|---|---|---|---|
| 2k | 224μs | 230μA | 720 bit/s | 64.44 ms |
| 8k | 896μs | 60μA | 180 bit/s | 277.76 ms |
| 32k | 3584μs | 18μA | 45 bit/s | 1208 ms |

FIGURE 10

| Name | Content | Length |
|---|---|---|
| preamble | fixed marker sequence | 10 bit |
| ID | object or event ID | 32 bit |
| CRC | checksum or object ID | 8 bit |

FIGURE 11

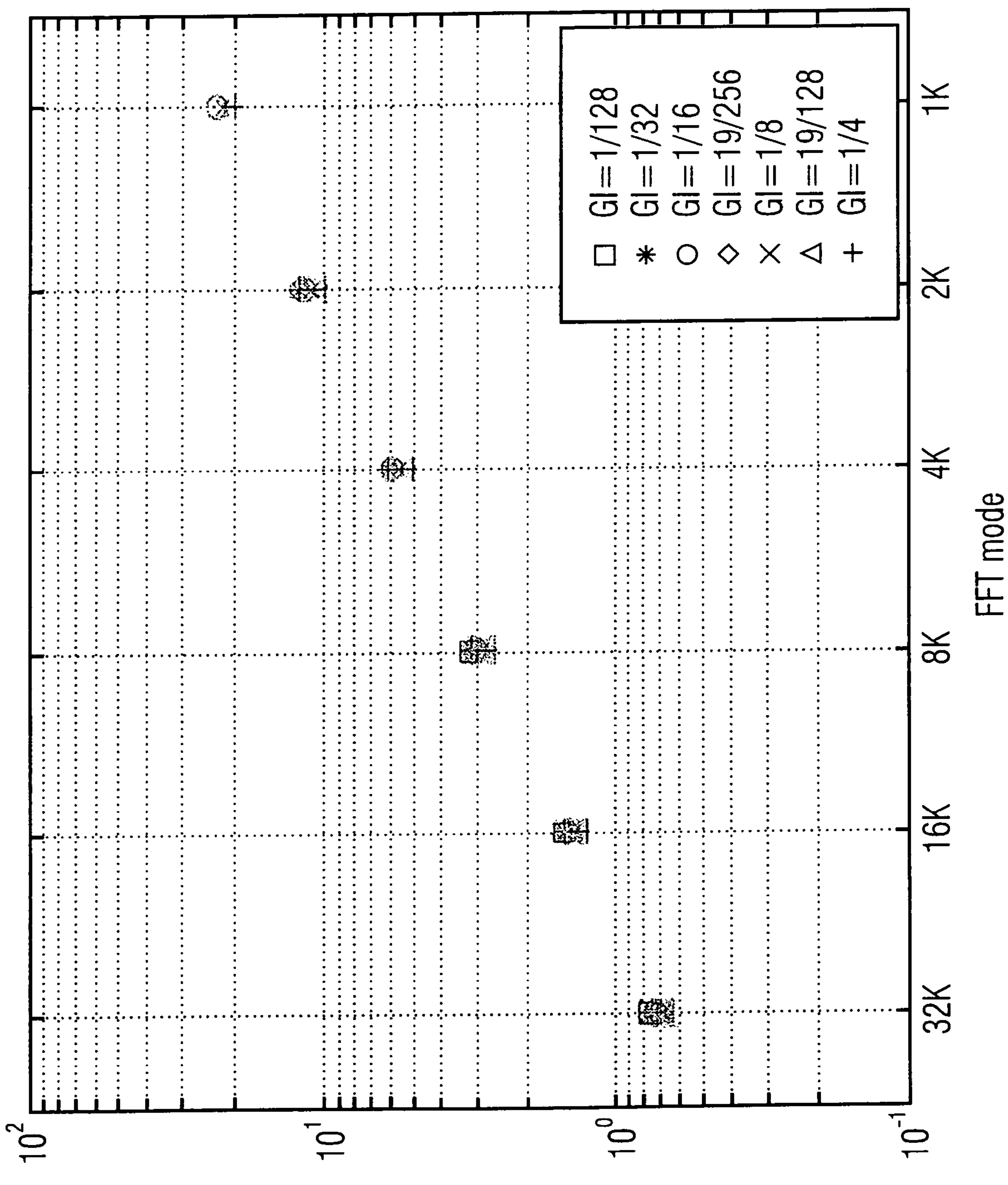
packet rate $r_p$ [pkt/s]
$10^2$
$10^1$
$10^0$
$10^{-1}$
32K
16K
8K
4K
2K
1K
FFT mode
GI=1/128
GI=1/32
GI=1/16
GI=19/256
GI=1/8
GI=19/128
GI=1/4

FIGURE 12

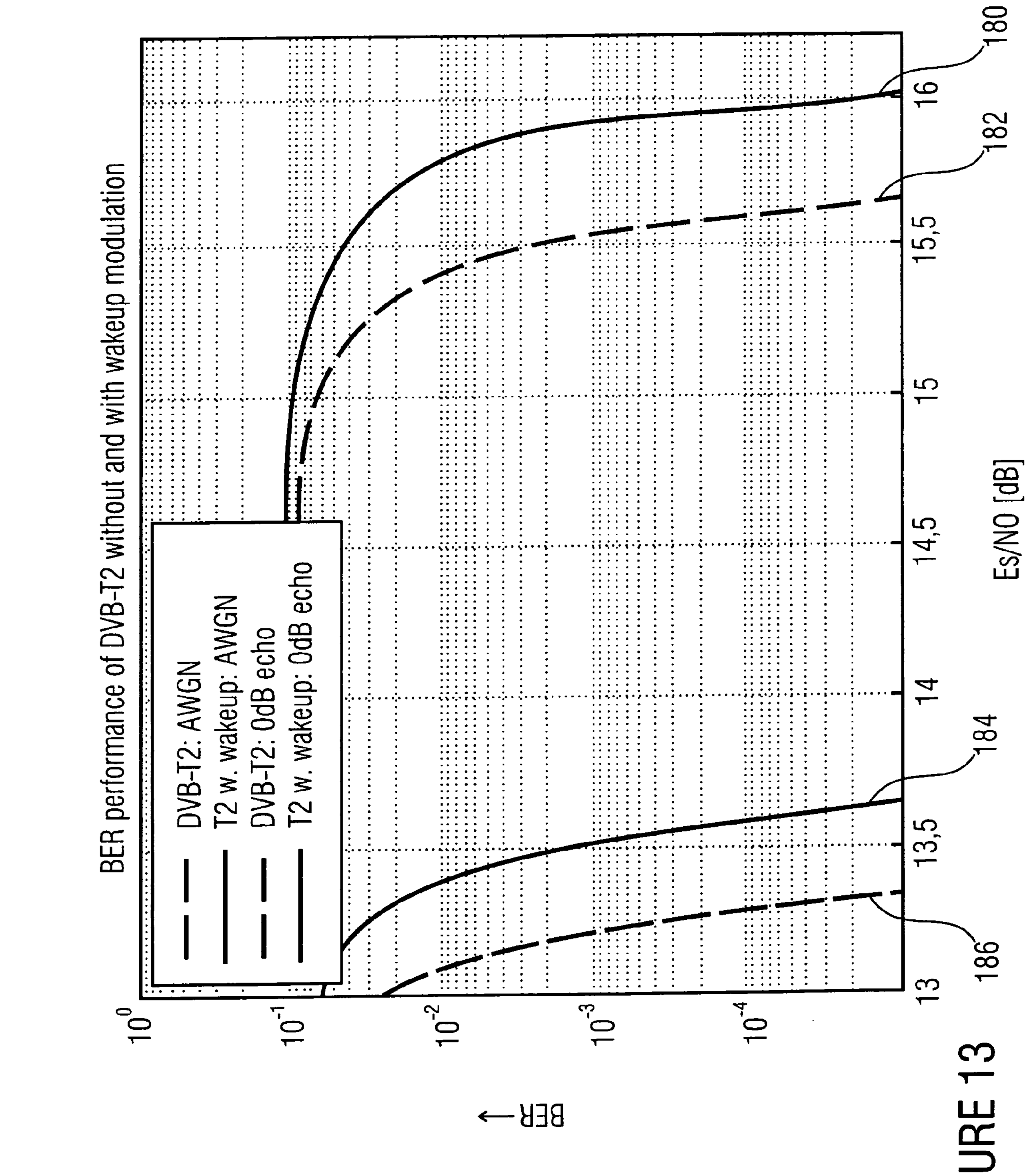
BER performance of DVB-T2 without and with wakeup modulation
DVB-T2: AWGN
T2 w. wakeup: AWGN
DVB-T2: 0dB echo
T2 w. wakeup: 0dB echo
10^0
10^-1
10^-2
10^-3
10^-4
BER →
13
13,5
14
14,5
15
15,5
16
Es/N0 [dB]
180
182
184
186

FIGURE 13

Europäisches Patentamt
European Patent Office
Office européen des brevets

# EUROPEAN SEARCH REPORT

Application Number
EP 12 17 3366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | US 2010/110955 A1 (WU SHIQUAN [CA] ET AL) 6 May 2010 (2010-05-06)<br>* abstract *<br>* paragraph [0003] - paragraph [0006] *<br>* paragraph [0041] - paragraph [0046] *<br>* paragraph [0049] *<br>----- | 1-5, 7-11, 13-15<br><br>6,12 | INV.<br>H04L27/02<br>H04L27/08<br>H04L5/00<br>H04L27/26<br>H04W52/02 |
| X | US 2002/169008 A1 (HIBEN BRADLEY M [US] ET AL HIBEN BRADLEY MICHAEL [US] ET AL) 14 November 2002 (2002-11-14)<br>* abstract *<br>* paragraph [0003] - paragraph [0005] *<br>* paragraph [0023] - paragraph [0024] *<br>* paragraph [0029] *<br>* paragraph [0032] - paragraph [0033] *<br>* paragraph [0036] - paragraph [0038] *<br>* paragraph [0047] - paragraph [0048] *<br>----- | 1,5,7, 10,11, 13-15 | |
| X | WO 2010/030945 A1 (QUALCOMM INC [US]; KADOUS TAMER A [US]; KOHLMANN MICHAEL [US]; GOROKHO) 18 March 2010 (2010-03-18)<br>* abstract *<br>* paragraph [0002] *<br>* paragraph [0019] - paragraph [0022] *<br>* paragraph [0028] - paragraph [0030] *<br>----- | 1,2,7-9, 13-15 | TECHNICAL FIELDS SEARCHED (IPC)<br>H04L<br>H04W |
| X | US 2006/258410 A1 (COLLINS BRUCE [US] ET AL) 16 November 2006 (2006-11-16)<br>* abstract *<br>* paragraph [0005] *<br>* paragraph [0034] *<br>* paragraph [0036] - paragraph [0039] *<br>* paragraph [0066] - paragraph [0069] *<br>* paragraph [0078] *<br>* paragraph [0083] - paragraph [0090] *<br>* paragraph [0094] *<br>* paragraph [0097] *<br>-----<br>-/-- | 1,5,7, 13-15 | |

The present search report has been drawn up for all claims

1

| Place of search | Date of completion of the search | Examiner |
|---|---|---|
| Munich | 6 November 2012 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 17 3366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IMIELINSKI:<br>IEEE TRANSACTIONS ON KNOWLEDGE AND DATA ENGINEERING,<br>vol. 9, no. 3, 1 January 1997 (1997-01-01), page 353, XP55043199,<br>ISSN: 1041-4347, DOI: 10.1109/69.599926<br>* the whole document *<br>----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 6 November 2012 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 17 3366

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2012

| Patent document cited in search report | Publication date | Patent family member(s) | Publication date |
|---|---|---|---|
| US 2010110955 A1 | 06-05-2010 | US 7672258 B1 | 02-03-2010 |
| | | US 2010110955 A1 | 06-05-2010 |
| US 2002169008 A1 | 14-11-2002 | US 2002169008 A1 | 14-11-2002 |
| | | WO 02093762 A1 | 21-11-2002 |
| WO 2010030945 A1 | 18-03-2010 | TW 201013390 A | 01-04-2010 |
| | | US 2010067422 A1 | 18-03-2010 |
| | | WO 2010030945 A1 | 18-03-2010 |
| US 2006258410 A1 | 16-11-2006 | AR 053031 A1 | 18-04-2007 |
| | | AT 498986 T | 15-03-2011 |
| | | AU 2006223309 A1 | 21-09-2006 |
| | | BR PI0609285 A2 | 09-03-2010 |
| | | CA 2600441 A1 | 21-09-2006 |
| | | CN 101171857 A | 30-04-2008 |
| | | EP 1856933 A1 | 21-11-2007 |
| | | JP 4990878 B2 | 01-08-2012 |
| | | JP 2008533594 A | 21-08-2008 |
| | | JP 2012050100 A | 08-03-2012 |
| | | KR 20070110439 A | 16-11-2007 |
| | | US 2006258410 A1 | 16-11-2006 |
| | | WO 2006099149 A1 | 21-09-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. WORTHAM.** Customers Angered as iPhones Overload AT&T. *The New York Times, no. New York,* 09 March 2009, B1
- **J. WORTHAM.** Customers Angered as iPhones Overload AT&T. *The New York Times,* 03 September 2009, B1
- A framework for nonlinear broadcasting using web technologies. **F. BEER ; A. MULL ; C. FORSTER.** Conference proceedings. Informatik Centrum, 2011, 1-4
- **A. GIL ; F. FRAILE ; M. RAMOS ; I. FEZ ; J. GUERRI.** Personalized multimedia touristic services for hybrid broadcast/broadband mobile receivers. *IEEE Transactions on Consumer Electronics,* 2010, vol. 56 (1), 211-219
- Assisting a global navigation satellite system using a local broadcast network. **A. MULL ; F. BEER ; S. URQUIJO ; L. PATIÑO-STUDENCKA.** Proceedings IEEE International Symposium on Broadband Multimedia Systems and Broadcasting (BMSB 2011. Institute of Electrical and Electronics Engineers, 2011, 327-332
- Internet Engineering Task Force (IETF. *Internet Engineering Task Force (IETF): FLUTE - File Delivery over Unidirectional Transport,* October 2004
- European Telecommunications Standards Institute (ETSI): Digital Video Broadcasting (DVB); DVB Specification for Data Broadcasting. *European Telecommunications Standards Institute,* June 2004
- **HONGGUANG ZHANG ; TIANPU JIANG ; ZHIQI GU ; SHIBAO ZHENG.** Design and implementation of broadcast file system based on DSM-CC data carousel protocol. *IEEE Transactions on Consumer Electronics,* 2004, vol. 50 (3), 929-933
- **T. IMIELINSKI ; S. VISWANATHAN ; B. BADRINATH.** Data on air: organization and access. *IEEE Transactions on Knowledge and Data Engineering,* 1997, vol. 9 (3), 353-372
- Broadcast disks: data management for asymmetric communication environments. **S. ACHARYA ; R. ALONSO ; M. FRANKLIN ; S. ZDONIK.** Proceedings of the 1995 ACM SIGMOD International Conference on Management of Data. ACM Press, 1995, vol. 24,2, 199-210
- Internet Engineering Task Force (IETF): FLUTE - File Delivery over Unidirectional Transport. *Internet Engineering Task Force,* 2004
- Sub-10 uA data reception with low latency using a 180-nm CMOS wake-up receiver at 868 MHz. **H. MILOSIU ; F. OEHLER ; M. EPPEL.** 2011 Semiconductor Conference Dresden (SCD 2011) (Institute of Electrical and Electronics Engineers. 2011, 1-4
- Korrelationssignale: Korrelationsfolgen und Korrelationsarrays in Nachrichten- und Informationstechnik. **H. D. LÜKE.** Meßtechnik und Optik. Springer, 1992
- **R. GOLD.** Optimal binary sequences for spread spectrum multiplexing (Corresp. *IEEE Transactions on Information Theory,* 1967, vol. 13 (4), 619-621
- **N. BURCH.** *Oxford Digital Switchover and DVB-Apps,* 2011
- European Telecommunications Standards Institute (ETSI): Digital Video Broadcasting (DVB); Frame Structure Channel Coding and Modulation for a Second Generation Digital Terrestrial Television Broadcasting System (DVB-T2. *European Telecommunications Standards Institute,* September 2009